# EUROPÄISCHE PATENTSCHRIFT

(11) **EP 1 792 723 B1**
(45) Veröffentlichungstag und Bekanntmachung des Hinweises auf die Patenterteilung: **27.01.2010**
(21) Anmeldenummer: 06125144.3
(22) Anmeldetag: 30.11.2006
(51) Int. Cl.: B32B 3/12, B32B 37/14

(54) **Verfahren und Vorrichtung zur Herstellung einer Leichtbauplatte**
Method and device for producing a lightweight building slab
Procédé et dispositif destinés à la fabrication d'un panneau de construction léger

(30) Priorität: 30.11.2005 DE 102005057550
(43) Veröffentlichungstag der Anmeldung: 06.06.2007
(60) Teilanmeldung: 07120588.4
(73) Patentinhaber: Fritz Egger GmbH & Co., 3105 Unterradlberg (AT)
(72) Erfinder:
(74) Vertreter: Cohausz & Florack

(56) Entgegenhaltungen:
- EP-A2- 1 029 665
- WO-A-2004/085152
- WO-A1-2006/037679
- FR-A1- 2 739 803
- US-A1- 2003 033 786

## Beschreibung

Die vorliegende Erfindung betrifft ein Verfahren und eine Vorrichtung zur Herstellung einer Leichtbauplatte, insbesondere für Möbel.

Es besteht bei Herstellern von Möbeln, insbesondere von Kastenmöbeln, ein großes Interesse daran, möglichst leichte Holzwerkstoffplatten für Wände, Bodenplatten und Tischplatten zu produzieren, um insbesondere Mitnahmemöbel deutlich im Gewicht zu reduzieren.

Zur Herstellung solcher Leichtbauplatten gibt es bereits unterschiedliche, meist aufwendige, Verfahren. Eine solche Leichtbauplatte besteht aus einer in Draufsicht rechteckigen unteren Schicht, meist einem Holzwerkstoff, z.B. einer mitteldichten Faserplatte (MDF-Platte) oder einer Spanplatte, insbesondere 3-8 mm stark. Darauf wird ein Rahmen aus Kanthölzern (längs und quer) oder entsprechend gesägte Spanplattenblöcke verleimt. In die Zwischenräume im Rahmen wird dann ein auseinandergezogenes Pappwabenmaterial verleimt. Die oberste Schicht (Deckel) besteht wiederum aus einer gleichartigen Holzwerkstoffplatte, vorzugsweise 2-8 mm stark, wie die untere Schicht.

Das einfachste Verfahren ist ein manuelles Beleimen der Kanthölzer, manuelles Legen der Kanthölzer, manuelles Einführen einer beleimten Wabe, manuelles Legen eines Deckels, um dann die so manuell fertiggestellte Wabenplatte in einer einfachen Haltepresse einige Stunden ruhen zu lassen, um den Leim aushärten zu lassen. Als Leim wird in diesen Fällen vorzugsweise ein Weißleim (PVAc) verwendet, der eine gewisse mehrstündige Aushärtezeit braucht.

Als weitere Verfahren sind automatisierte Verfahren bekannt, die die gleichen Schritte wie oben beschrieben, aber automatisiert, durchführen. Das heißt, auch hier werden auf die Unterschicht in mehreren Schritten Kanthölzer mit unterschiedlicher Ausrichtung (längs und quer) oder entsprechende Spanplattenblöcke aufgelegt, beleimt, dann die Wabe in verschiedene Bereiche automatisiert eingelegt, ein Deckel automatisch aufgelegt und die fertige Wabenplatte üblicherweise in Mehretagenpressen ausgehärtet.

Ein weiteres Verfahren, bei dem ein Schmelzkleber (Hotmelt) zur Anwendung kommt, wurde von der Firma Kuper (Rietberg) im Jahr 2004 vorgestellt. Bei diesem Verfahren handelt es sich um ein technisch sehr aufwendiges Verfahren, welches in verschiedenen Schritten mit Längs- und Querbewegungen des späteren Produktes einzelne Kanthölzer an allen vier Seiten der Platte sowie zum Teil auch in der Mitte als Abstützung auflegt und dann in die entstehenden Hohlräume mechanisch die Wabenplatte einlegt.

Diese genannten automatisierten Verfahren haben den Nachteil einer sehr aufwendigen, mechanischen Automatisierung, eines entsprechend hohen Investitionspreises und einer relativ geringen Produktionskapazität. Diese recht geringe Produktionskapazität, üblicherweise unter 4 Takten/min., resultiert aus dem komplizierten Verfahren und den insbesondere mehrfachen Wechseln der Vorschubrichtung (längs, quer) des späteren fertigen Produktes. Auch die Einlegung von Kanthölzern längs und quer erhöht die Komplexität des Verfahrens.

Die WO 2004/085152 A1 offenbart ein Verfahren zur Herstellung von Leichtbauplatten, insbesondere für Möbel, bei dem auf eine untere Deckplatte ein Wabenmaterial aufgelegt wird, auf das Wabenmaterial eine obere Deckplatte aufgelegt wird, die Herstellung in einem kontinuierlichen Produktionsverfahren mit einer einzigen Produktionsbewegungsrichtung durchgeführt wird und mindestens eine Längsrahmenleiste mit ihrer Längserstreckung parallel zu der Produktionsbewegungsrichtung auf die untere Deckplatte aufgelegt wird.

Von Nachteil bei dem Verfahren gemäß diesem Stand der Technik ist jedoch, dass jedes der die Längsrahmenleiste bildenden Kanthölzer präzise am Rand der unteren Deckplatte auf diese aufgelegt werden muss, so dass möglichst kein Überstand des Kantholzes gegenüber der unteren und später der oberen Deckplatte oder ein Überstand der jeweiligen Deckplatte gegenüber dem Kantholz entsteht. Bei diesem Verfahren erfordert das Zuführen der Kanthölzer parallel zur Produktionsbewegungsrichtung und das Auflegen auf die untere Deckplatte einen hohen technischen Aufwand. Außerdem ist die Herstellung einer Leichtbauplatte gemäß diesem Stand der Technik zeitaufwendig.

Aus der nachveröffentlichten Druckschrift WO 2006 / 037679 A1 mit älterem Zeitrang ist ein Verfahren zur Herstellung von Leichtbauplatten, insbesondere für Möbel, bekannt,
- bei dem auf eine untere Deckplatte ein Wabenmaterial aufgelegt wird,
- bei dem mindestens eine Längsrahmenleiste mit ihrer Längserstreckung parallel zu der Produktionsbewegungsrichtung in die Mitte auf die untere Deckplatte aufgelegt wird,
- bei dem auf das auf die untere Deckplatte aufgelegte Wabenmaterial und die mindestens eine Längsrahrnenleiste eine obere Deckplatte aufgelegt wird,
- bei dem die Herstellung in einem kontinuierlichen Produktionsverfahren mit einer einzigen Produktionsbewegungsrichtung durchgeführt wird,
- bei dem die aufeinandergelegten Elemente ein gegeneinander drückendes Walzenpaar durchlaufen, mittels dem sie zusammengedrückt und fixiert werden, und
- bei dem die Leichtbauplatte in zwei Wabenplatten zerschnitten wird, so dass sie jeweils an einer Seite eine Rahmenleiste haben.

Es ist daher die Aufgabe der vorliegenden Erfindung, ein Verfahren und eine Vorrichtung zur Herstellung einer Leichtbauplatte zu schaffen, womit eine besonders effektive Herstellung möglich ist.

Die zuvor hergeleitete und aufgezeigte Aufgabe wird gelöst durch ein Verfahren zur Herstellung von Leichtbauplatten, insbesondere für Möbel, bei dem auf eine untere Deckplatte ein Wabenmaterial aufgelegt wird, bei dem mindestens eine Längsrahmenleiste mit ihrer Längserstreckung parallel zu der Produktionsbewegungsrichtung in die Mitte auf die untere Deckplatte aufgelegt wird, bei dem auf das auf die untere Deckplatte aufgelegte Wabenmaterial und die mindestens eine Längsrahmenleiste eine obere Deckplatte aufgelegt wird, bei dem die Herstellung in einem kontinuierlichen Produktionsverfahren mit einer einzigen Produktionsbewegungsrichtung durchgeführt wird, bei dem die aufeinandergelegten Elemente einen Kalander durchlaufen, der beheizt ist, mittels dem sie zusammengedrückt und fixiert werden, und bei dem die Leichtbauplatte in zwei Wabenplatten zerschnitten wird, so dass sie jeweils an einer Seite eine Rahmenleiste haben.

Die Aufgabe wird auch gelöst durch eine Vorrichtung zur Herstellung von Leichtbauplatten, insbesondere für Möbel, mit einer Station zum Zuführen einer unteren Deckplatte, mit einer weiteren Station zum Auflegen von Wabenmaterial auf die untere Deckplatte, mit einer weiteren Station zum Auflegen von mindestens einer Längsrahmenleiste in die Mitte auf die untere Deckplatte benachbart zu dem bereits auf die untere Deckplatte aufgelegten oder zu dem noch auf die untere Deckplatte aufzulegenden Wabenmaterial, mit einer weiteren Station zum Auflegen einer oberen Deckplatte auf das auf die untere Deckplatte aufgelegte Wabenmaterial und die mindestens eine Längsrahmenleiste, mit einem Kalander, der beheizbar ist und mittels dem die aufeinandergelegten Elemente zusammengedrückt und fixiert werden, mit Mitteln, um die Leichtbauplatte in zwei Wabenplatten zu zerschneiden, so dass sie jeweils an einer Seite eine Rahmenleiste haben.

Vorteilhafte Ausgestaltungen sind Gegenstand der Unteransprüche.

Erfindungsgemäß wird bei dem Verfahren auf die untere Deckplatte ein Wabenmaterial sowie darauf die obere Deckplatte aufgelegt, wobei die Herstellung in einem kontinuierlichen Produktionsverfahren mit einer einzigen Produktionsbewegungsrichtung durchgeführt wird. Wenn zwischen die fertigen Platten aus Wabenmaterial keine Querhölzer eingelegt werden, kann das verfahren vorteilhaft in einer Produktionsrichtung ohne störende Quer- oder Haltebewegungen durchgeführt werden, was zu einer sehr hohen Produktionsleistung führt, beispielsweise von mehr als 8 Platten in der Minute. Die einzelnen Verfahrensschritte, wie insbesondere Auflegen und Verkleben der einzelnen Elemente, können auf einfache Weise hintereinander durchgeführt werden.

Gemäß einem weiteren Merkmal des Verfahrens wird auf die untere Deckplatte mindestens eine Längsrahmenleiste und ein Wabenmaterial sowie darauf eine obere Deckplatte aufgelegt. Dabei wird die mindestens eine Längsrahmenleiste mit ihrer Längserstreckung parallel zu der Produktionsbewegungsrichtung in die Mitte auf die untere Deckplatte aufgelegt. Die Reihenfolge, in der die mindestens eine Längsrahmenleiste und das Wabenmaterial auf die untere Deckplatte aufgelegt werden, ist so wählbar, wie es der Durchführung des Verfahrens bzw. der Anordnung der Vorrichtung zweckdienlich ist. Die Leichtbauplatte wird dann in zwei Wabenplatten zerschnitten, so dass sie jeweils an einer Seite eine Rahmenleiste haben. Schließlich durchlaufen diese auf diese Weise hergestellten Wabenplatten einen Kalander, der beheizt ist.

Weiterhin wird für dieses Verfahren bevorzugt ein schnell reagierender Schmelzkleber verwendet, so dass keine Wartezeiten für die Aushärtung des Klebstoffes notwendig sind. Die mit Klebstoff beschichteten Elemente können auf einfache Weise mittels der Kalander zusammengefügt werden.

Die Deckplatten können auch in Form von gerollten Platten, also endlos in Rollen, bereitgestellt und der Produktionslinie zugeführt werden, wobei die Platten vorzugsweise entweder unmittelbar vor dem Zusammenfügen mit dem Wabenkern abgelängt werden oder erst nach dem Verpressen. Es ist also denkbar, mit dem erfindungsgemäßen Verfahren einen unendlichen Plattenstrang kontinuierlich herzustellen, von dem in einem weiteren Verfahrensschritt einzelne Leichtbauplatten durch Ablängen erzeugt werden.

Die Erfindung wird nachfolgend an Hand eines Ausführungsbeispiels mit Bezug auf die beigefügten Zeichnungen näher erläutert. Es zeigen:
- Figur 1: eine schematische Ansicht eines Ausführungsbeispiels der erfindungsgemäßen Vorrichtung zur Herstellung von Leichtbauplatten,
- Figur 2A bis 2C: mehrere Ansichten eines ersten Ausführungsbeispiels der erfindungsgemäßen Leichtbauplatte, und
- Figur 3A und 3B: mehrere Ansichten eines Beispiels einer Leichtbauplatte, das nicht Gegenstand der Erfindung ist.

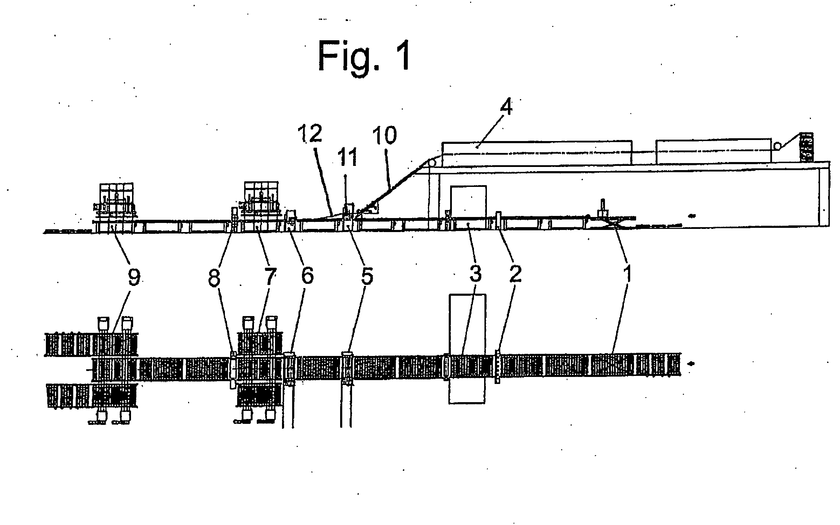

Bei dem erfindungsgemäßen Verfahren wird als untere Deckplatte eine dünne Holzwerkstoffplatte, vorzugsweise 2-8 mm starke MFD- oder Spanplatte, in Produktionsrichtung von einer Station 1 in eine Produktionsbewegungsrichtung gefördert, die in Figur 1 von rechts nach links verläuft. Im Ausführungsbeispiel der Fig. 1 weist die Station 1 einen Hubtisch auf, dem die dünnen Holzwerkstoffplatten als untere Deckplatten des Beispiels in Produktionsrichtung von einem Aufgabestapel zugeführt werden. Danach wird an einer Leimauftragsstation 2 über einen Düsenauftrag eine raupenförmige Leimbeschichtung auf diese aufgelegte, untere Deckplatte, bevorzugt mit Schmelzkleber, aufgetragen.

Alternativ ist es möglich, die untere Deckplatte auf einer Rolle, vorzugsweise einer Vorratsrolle, bereitzustellen. In diesem Fall ist eine entsprechende Rolle in der Station 1 angeordnet. Von dieser Rolle kann die untere Deckplatte zugeführt werden. Vorzugsweise wird die untere Deckplatte bei der Zuführung mittels einer ersten Ablängungsvorrichtung in einer geeigneten Länge abgelängt. Es ist jedoch auch möglich, die untere Deckplatte dem Produktionsverfahren kontinuierlich zuzuführen. In diesem Fall kann die Leichtbauplatte oder die untere Deckplatte zu einem späteren Zeitpunkt im Produktionsverfahren abgelängt werden. Die Ablängung kann gleich nach dem gewünschten Plattenmaß erfolgen, um einen möglichst geringen Verschnitt zu haben, wie das der Fall ist, wenn Platten aus fixen Großformaten geschnitten werden.

Erfindungsgemäß umfasst die Leichtbauplatte eine untere Deckplatte, ein Wabenmaterial und eine obere Deckplatte. Ferner umfasst die Leichtbauplatte auch mindestens eine Längsrahmenleiste.

An der nächsten Station 3 werden dann Längsrahmenleisten auf die untere Deckplatte gelegt. In einer bevorzugten Ausführungsform der Erfindung wird ausschließlich eine Längsrahmenleiste in der Mitte der Platte in Produktionsbewegungsrichtung gelegt, so dass die fertige Leichtbauplatte später mit einem Querschnitt in zwei Wabenplatten geteilt werden kann, die jeweils an einer Seite eine Rahmenleiste haben und an den anderen drei Seiten über bekannte Verfahren eine Kantenanleimung oder Kantenanfahren erhalten müssen. Alternativ können aber auch zwei oder drei Längsrahmenleisten auf die untere Deckplatte gelegt werden.

In einem weiteren Schritt wird durch eine oberhalb der Zuführung der unteren Deckplatte angeordnete Station 4 plattenförmiges Wabenmaterial zugeführt, vorzugsweise wird dabei eine Pappwabenextrusion durchgeführt, um eine wabenförmige Platte von oben zuzuführen und benachbart zu der Längsrahmenleiste abzulegen, wobei die Längsrahmenleiste und das Pappwabenmaterial dieselbe Höhe besitzen. Gemäß der Erfindung ist dabei besonders hervorzuheben, dass die Zuführung des Wabenmaterials oberhalb und direkt in Linie mit der Produktionsrichtung der Anlage angeordnet ist. Dadurch wird gewährleistet, dass sämtliche Materialflüsse in ausschließlich einer Richtung laufen und damit die Anlagenleistung deutlich erhöht wird.

Wurde die untere Deckplatte kontinuierlich über eine Rolle zugeführt, kann die Ablängung der unteren Deckplatte in einer geeigneten Länge vor der nächsten Station 5 erfolgen.

An der nächsten Station 5 der Anlage wird das oberhalb der Produktionsrichtung extrudierte Wabenmaterial über eine Rutsche bzw. ein schräg nach unten geführtes Förderband 10 zu einer Leimauftragsmaschine 11 gebracht, an der unten Leim auf das Wabenmaterial aufgetragen wird, vorzugsweise mit einem schnell reagierenden Schmelzkleber. Dieses von unten beleimte Wabenmaterial 12 wird dann automatisch links und rechts der aufgeleimten Längsrahmenleiste auf die untere Deckplatte aufgebracht.

Gemäß einer alternativen Ausführungsform wird das von unten beleimte Wabenmaterial in die Zwischenräume zwischen einer rechten, einer mittleren und einer linken Längsrahmenleiste eingebracht.

In dem in Fig. 1 gezeigten Ausführungsbeispiel der Vorrichtung zur Herstellung einer Leichtbauplatte wird die mindestens eine Längsrahmenleiste vor dem Wabenmaterial auf die untere Deckplatte aufgebracht. Das heißt, die Station 3 ist der Station 5 in dem Produktionsverfahren vorgelagert. Es ist jedoch auch möglich, die Station 5 der Station 3 in dem Produktionsverfahren vorzulagern, so dass das Wabenmaterial vor der mindestens einen Längsrahmenleiste auf die untere Deckplatte aufgebracht wird. Weiterhin ist es möglich, die Station 3 und die Station 5 so anzuordnen, dass die mindestens eine Längsrahmenleiste und das Wabenmaterial im Wesentlichen gleichzeitig in dem Produktionsverfahren auf die untere Deckplatte aufgebracht werden.

Nach der Aufbringung des von unten beleimten Wabenmaterials auf die untere Deckplatte wird das bisher bestehende Verbundelement im Durchlauf durch eine Leimauftragsmaschine von oben beleimt. Dabei wird der Leim, bevorzugt Schmelzkleber, auf die oberen Seiten der Längsrahmenleisten und auf die Oberseite der Wabenelemente an der Station 6 aufgebracht.

Nach dem Beleimen wird von einem oberhalb angeordneten Magazin oder über einen Vakuumtransporteur von der Seite eine Deckplatte, z.B. aus Holzwerkstoff, bevorzugt 2-8 mm starke MDF- oder Spanplatte, an der Station 7 zugeführt.

Alternativ ist es möglich, die obere Deckplatte auf einer Rolle, vorzugsweise einer Vorratsrolle, bereitzustellen. In diesem Fall ist eine entsprechende Rolle in der Station 7 angeordnet. Von dieser Rolle kann die obere Deckplatte dem Produktionsverfahren zugeführt werden. Vorzugsweise wird die obere Deckplatte bei der Zuführung mittels einer zweiten Ablängungsvorrichtung in einer geeigneten Länge abgelängt. Es ist jedoch auch möglich, die obere Deckplatte kontinuierlich zuzuführen. In diesem Fall kann die Leichtbauplatte oder die obere Deckplatte zu einem späteren Zeitpunkt im Produktionsverfahren abgelängt werden.

Danach durchläuft die jetzt vollständige Wabenplatte einen Kalander 8, der beheizt ist. In diesem Kalander 8 wird die gesamte Wabenplatte auf ein vordefiniertes Maß gebracht und der Leim, vorzugsweise Schmelzkleber, ausgehärtet bzw. ausreagiert.

Vorzugsweise kann, wenn beispielsweise die obere Deckplatte dem Produktionsverfahren kontinuierlich über eine Rolle zugeführt wird, aber auch in jedem anderen Fall, die Ablängung der Leichtbauplatte in einer geeigneten Länge nach Durchlauf des Kalanders 8 erfolgen. Die Ablängung der Platte kann gleich nach dem gewünschten Plattenmaß erfolgen, um einen möglichst geringen Verschnitt zu haben, wie das der Fall ist, wenn Platten aus fixen Großformaten geschnitten werden.

Anschließend wird an der Station 9 das fertige Verbundelement entweder in Linie weiterbearbeitet, z.B. mit einer dekorativen Folie kaschiert oder in Linie abgestapelt. Es können auch noch weitere Bearbeitungsschritte, wie Schneiden, Beschichten, Lackieren etc. erfolgen.

Bei dem obigen Ausführungsbeispiel des Verfahrens wird zuerst die Längsrahmenleiste auf die untere Deckschicht aufgelegt, wobei es natürlich auch möglich ist, zuerst das Wabenmaterial und dann die Längsrahmenleiste aufzulegen. Zudem ist es möglich, zunächst die untere Deckschicht mit Leim zu beschichten und dann ohne weitere Beleimung die mindestens eine Längsrahmenleiste sowie das mindesten ein plattenförmige Wabenmaterial auf die untere Deckschicht aufzulegen und zu fixieren.

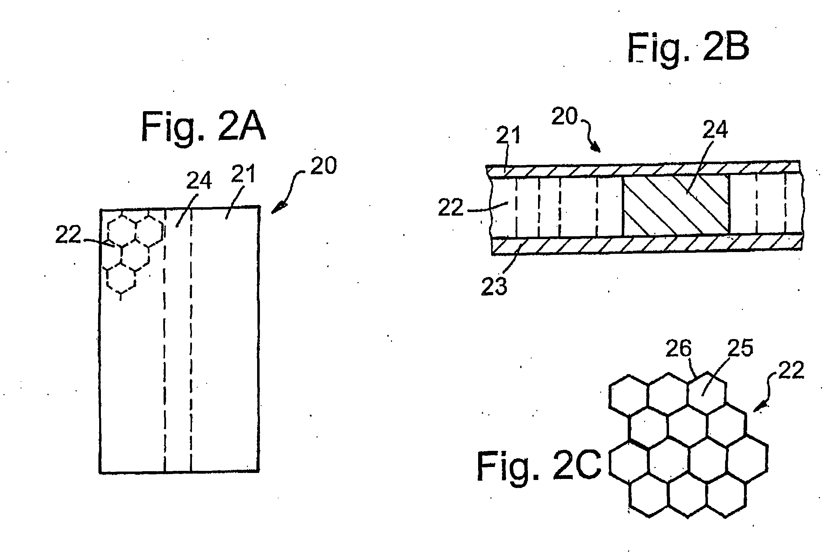

In den Figuren 2A bis 2C ist ein erstes Ausführungsbeispiel einer erfindungsgemäßen Leichtbauplatte 20 dargestellt, die in Draufsicht rechteckig ist und deren längere Seiten bei dem Herstellungsverfahren in Produktionsbewegungsrichtung bewegt werden: Diese umfasst eine obere Deckplatte 21, ein Wabenmaterial 22, eine untere Deckplatte 23 sowie eine mittige Längsrahmenleiste 24, die als Kantholz im Querschnitt rechteckig ausgebildet ist.

Das Wabenmaterial 22 umfasst Wände 26, die jeweils einen die Deckplatten 21 und 23 verbindenden Hohlraum 25 umgeben und in dem Ausführungsbeispiel sechseckig ausgebildet sind, wobei auch andere Formen möglich sind. Das Wabenmaterial 22 kann vorzugsweise aus Pappe, Kunststoff oder aus einer Mischung dieser Materialien bestehen.

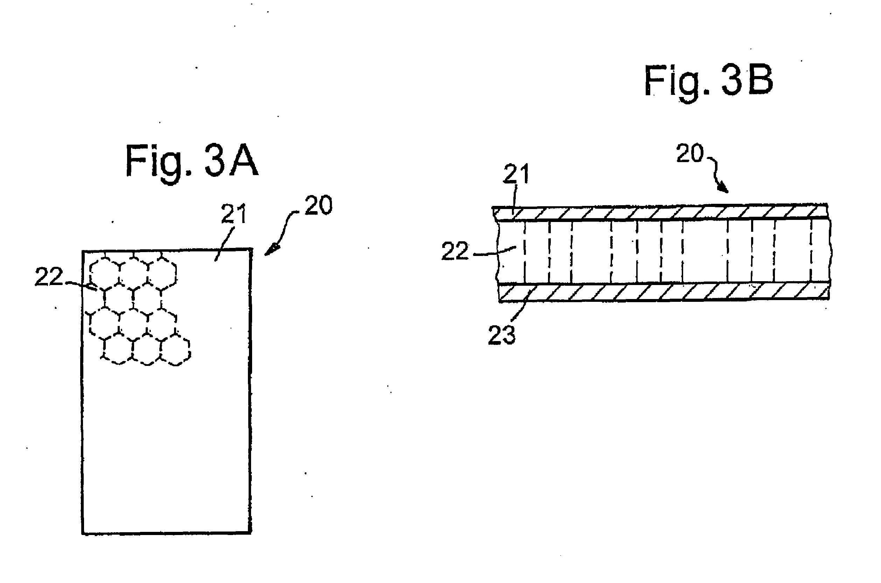

In den Figuren 3A und 3B ist ein Beispiel einer Leichtbauplatte 20 dargestellt, die nicht Gegenstand der vorliegenden Erfindung ist. Dabei ist die Leichtbauplatte in Draufsicht rechteckig, wobei deren längere Seiten bei ihrer Herstellung in Produktionsbewegungsrichtung bewegt werden: Diese Leichtbauplatte 20 umfasst eine obere Deckplatte 21, ein Wabenmaterial 22 und eine untere Deckplatte 23.

## Patentansprüche

1. Verfahren zur Herstellung von Leichtbauplatten, insbesondere für Möbel,
- bei dem auf eine untere Deckplatte (23) ein Wabenmaterial (22) aufgelegt wird,
- bei dem mindestens eine Längsrahmenleiste (24) mit ihrer Längserstreckung parallel zu der Produktionsbewegungsrichtung in die Mitte auf die untere Deckplatte (23) aufgelegt wird,
- bei dem auf das auf die untere Deckplatte (23) aufgelegte Wabenmaterial (22) und die mindestens eine Längsrahmenleiste (24) eine obere Deckplatte (21) aufgelegt wird,
- bei dem die Herstellung in einem kontinuierlichen Produktionsverfahren mit einer einzigen Produktionsbewegungsrichtung durchgeführt wird,
- bei dem die aufeinandergelegten Elemente einen Kalander (8) durchlaufen, der beheizt ist, mittels dem sie zusammengedrückt und fixiert werden, und
- bei dem die Leichtbauplatte in zwei Wabenplatten zerschnitten wird, so dass sie jeweils an einer Seite eine Rahmenleiste haben.

2. Verfahren nach Anspruch 1,
**dadurch gekennzeichnet,**
**dass** die mindestens eine Längsrahmenleiste (24) im Produktionsverfahren im Wesentlichen gleichzeitig mit dem Wabenmaterial (22) oder vor dem Wabenmaterial (22) oder nach dem Wabenmaterial (22) auf die untere Deckplatte (23) aufgelegt wird.

3. Verfahren nach einem der Ansprüche 1 oder 2,
**dadurch gekennzeichnet,**
**dass** die untere Deckplatte (23), das Wabenmaterial (22), die mindestens eine Längsrahmenleiste (24) und/oder die obere Deckplatte (21) miteinander verklebt werden.

4. Verfahren nach Anspruch 3,
**dadurch gekennzeichnet,**
**dass** zum Verkleben ein schnell reagierender Hotmelt-Klebstoff, vorzugsweise EVA, PUR, PO, APAO und/oder PA verwendet wird.

5. Verfahren nach einem der Ansprüche 1 bis 4,
**dadurch gekennzeichnet,**
**dass** die Leichtbauplatten mit einer Produktionsleistung von mehr als 6 Platten pro Minute bei Wabenplattenabmessungen von 3000 x 1000 mm hergestellt werden.

6. Vorrichtung zur Herstellung von Leichtbauplatten, insbesondere für Möbel,
- mit einer Station (1) zum Zuführen einer unteren Deckplatte (23),
- mit einer weiteren Station (5) zum Auflegen von Wabenmaterial (22) auf die untere Deckplatte (23),
- mit einer weiteren Station (3) zum Auflegen von mindestens einer Längsrahmenleiste (24) in die Mitte auf die untere Deckplatte (23) benachbart zu dem bereits auf die untere Deckplatte (23) aufgelegten oder zu dem noch auf die untere Deckplatte (23) aufzulegenden Wabenmaterial (22),
- mit einer weiteren Station (7) zum Auflegen einer oberen Deckplatte (21) auf das auf die untere Deckplatte (23) aufgelegte Wabenmaterial (22) und die mindestens eine Längsrahmenleiste (24),
- mit einem Kalander (8), der beheizbar ist und mittels dem die aufeinandergelegten Elemente zusammengedrückt und fixiert werden,
- mit Mitteln, um die Leichtbauplatte in zwei Wabenplatten zu zerschneiden, so dass sie jeweils an einer Seite eine Rahmenleiste haben.

7. Vorrichtung nach Anspruch 6,
**dadurch gekennzeichnet,**
**dass** Leimauftragsvorrichtungen (2, 6, 11) an den Stationen vorgesehen sind, die insbesondere kontinuierlich arbeiten.

8. Vorrichtung nach Anspruch 6 oder 7,
**dadurch gekennzeichnet,**
**dass** die Station (1) für die Zuführung der unteren Deckplatte (23) und/oder die Station (7) für die Zuführung der oberen Deckplatte (21) zur Aufnahme einer Rolle ausgebildet ist, auf der sich das Deckplattenmaterial befindet und von der das Deckplattenmaterial zugeführt wird.

## Claims

1. A method for manufacturing lightweight building boards, particularly for furniture,
- wherein a honeycomb material (22) is put on a bottom cover plate (23),
- wherein at least one longitudinal frame batten (24) is put in the middle onto the bottom cover plate (23) with its longitudinal extension in parallel to the moving direction during production,
- wherein a top cover plate (21) is put upon the honeycomb material (22), which has been put on the bottom cover plate (23), and said at least one longitudinal frame batten (24),
- wherein manufacturing is performed in a continuous production process comprising a single moving direction during production,
- wherein the elements put upon one another are passed through a heated calendar (8) by means of which they are compressed and fixed, and
- wherein the lightweight building board is cut into two honeycomb boards in such a way that they each have a frame batten on one side.

2. The method according to claim 1,
**characterized in that** said at least one longitudinal frame batten (24) is put onto the bottom cover plate (23) substantially at the same time with the honeycomb material (22) or prior to the honeycomb material (22) or after the honeycomb material (22) during the production process.

3. The method according to one of claims 1 or 2, **characterized in that** said bottom cover plate (23), said honeycomb material (22), said at least one longitudinal frame batten (24) and/or said top cover plate (21) are adhesively bonded together.

4. The method according to claim 3,
**characterized in that** a quick reacting hot melt adhesive, preferably EVA, PUR, PO, APAO and/or PA, is used for adhesive bonding.

5. The method according to one of claims 1 to 4, **characterized in that** the lightweight building boards are manufactured at a production output of more than 6 boards per minute with dimensions of the honeycomb board of 3000x1000 mm.

6. A device for manufacturing lightweight building boards, particularly for furniture,
- comprising a station (1) for feeding a bottom cover plate (23),
- comprising another station (5) for putting honeycomb material (22) onto the bottom cover plate (23),
- comprising another station (3) for putting at least one longitudinal frame batten (24) onto the middle of the bottom cover plate (23) adjacent to the honeycomb material (22) which already has been put onto the bottom cover plate (23) or is to be put later onto the bottom cover plate (23),
- comprising another station (7) for putting a top cover plate (21) onto the honeycomb material (22), which has been put onto the bottom cover plate (23), and said at least one longitudinal frame batten (24),
- comprising a calendar (8) which can be heated and by means of which the elements put on top of each other are compressed and fixed,
- comprising means for cutting the lightweight building board into two honeycomb boards in such a way that each has a frame batten on one side.

7. The device according to claim 6,
**characterized in that** glue application devices (2, 6, 11) are provided at the stations, working in particular in a continuous fashion.

8. The device according to claim 6 or 7,
**characterized in that** the station (1) for feeding the bottom cover plate (23) and/or the station (7) for feeding the top cover plate (21) is configured for receiving a roll carrying the cover plate material and from which the cover plate material is fed.

## Revendications

1. Procédé pour la fabrication de panneaux légers de constructions, en particulier pour du mobilier,
- un matériau alvéolaire (22) étant placé sur un panneau de couverture inférieur (23),
- au moins une moulure de cadre longitudinale (24) étant placée en extension longitudinale parallèlement au sens de déplacement de production au milieu sur le panneau de couverture inférieur (23),
- un panneau de couverture supérieur (21) étant placé sur le matériau alvéolaire (22), qui est placé sur le panneau de couverture inférieur (23), et sur la au moins une moulure de cadre longitudinale (24),
- la fabrication étant effectuée dans un procédé de production continu dans une direction unique de production,
- les éléments superposés traversant une calandre (8) chauffée au moyen de laquelle ils sont pressés ensemble et fixés et
- le panneau léger de construction est découpé en deux panneaux alvéolaires de manière à avoir respectivement sur un côté une moulure de cadre.

2. Procédé selon la revendication 1, **caractérisé en ce que** la au moins une moulure de cadre longitudinale (24) est placée dans le procédé de production essentiellement en même temps que le matériau alvéolaire (22) ou avant le matériau alvéolaire (22) ou après le matériau alvéolaire (22) sur le plateau de couverture inférieur (23).

3. Procédé selon l'une des revendications 1 ou 2, **caractérisé en ce que** le panneau de couverture inférieur (23), le matériau alvéolaire (22), la au moins une moulure de cadre longitudinale (24) et/ou le panneau de couverture supérieur (21) sont collés les uns aux autres.

4. Procédé selon la revendication 3, **caractérisé en ce que** pour le collage il est utilisé une colle Hotmelt à réaction rapide, de préférence EVA, PUR, PO, APAO et/ou PA.

5. Procédé selon l'une des revendications 1 à 4, **caractérisé en ce que** les panneaux légers de construction sont fabriqués à une cadence de production de plus de 6 panneaux par minute aux dimensions de panneaux alvéolaires de 3000 x 1000 mm.

6. Dispositif pour la fabrication de panneaux de construction léger, en particulier pour du mobilier,
- comprenant un poste (1) pour l'amenée d'un panneau inférieur de couverture (23),
- comprenant un autre poste (5) pour l'application de matériau alvéolaire (22) sur le panneau inférieur de couverture (23)
- comprenant un autre poste (3) pour l'application d'au moins une moulure de cadre longitudinale (24) au milieu sur le panneau de couverture inférieur (23) à proximité du matériau alvéolaire (22) déjà placé sur le panneau de couverture inférieur (23) ou à appliquer encore sur le panneau de couverture inférieur (23),
- comprenant un autre poste (7) pour l'application d'un panneau de couverture supérieur (21) sur le matériau alvéolaire (22) appliqué sur le panneau de couverture inférieur (23) et sur la au moins une moulure longitudinale de cadre (24),
- comprenant une calandre (8) qui peut être chauffée et au moyen desquelles sont pressés et fixés ensemble les éléments superposés,
- comprenant des moyens pour découper le panneau léger de construction en deux panneaux alvéolaires de sorte qu'ils ont respectivement sur un côté une moulure de cadre.

7. Dispositif selon la revendication 6,
**caractérisé en ce que** des dispositifs d'application de colle (2, 6, 11) sont prévus sur les postes travaillant en particulier en continu.

8. Dispositif selon la revendication 6 ou 7, **caractérisé en ce que** le poste (1) pour l'amenée du panneau inférieure de couverture (23) et/ou le poste (7) pour l'amenée du panneau supérieur de couverture (21) est réalisé pour le logement d'une bobine sur laquelle se trouve le matériau de panneau de couverture et depuis laquelle est alimenté le matériau de panneau de couverture.
